# FASCICULE DE BREVET EUROPEEN

(11) **EP 3 689 516 B1**
(45) Date de publication et mention de la délivrance du brevet: **05.05.2021**
(21) Numéro de dépôt: 20152393.3
(22) Date de dépôt: 17.01.2020
(51) Int. Cl.: B23B 49/00

(54) **SYSTÈME D'AIDE AU PERÇAGE**
HILFSSYSTEM ZUM BOHREN
SYSTEM TO ASSIST DRILLING

(30) Priorité: 04.02.2019 FR 1901063
(43) Date de publication de la demande: 05.08.2020
(73) Titulaire: AIRBUS OPERATIONS (S.A.S.), 31060 Toulouse (FR)
(72) Inventeur: FARRE, Eric, 31060 TOULOUSE Cedex 9 (FR)
(74) Mandataire: Gicquel, Olivier Yves Gérard

(56) Documents cités:
- US-A- 2 294 303
- US-A- 2 608 114
- US-A- 2 905 030
- US-A1- 2017 008 094

## Description

La présente invention concerne un système d'aide au perçage ainsi qu'une perceuse équipée d'un tel système d'aide.

Il arrive régulièrement qu'une personne souhaite percer deux plaques posées l'une sur l'autre à l'aide d'une perceuse équipée d'un foret. Dans ce cas, elle place le foret contre une plaque et elle appuie sur la perceuse. Il est connu que la force exercée par la personne doit être régulière et pas trop importante pour limiter les risques d'écaillage du matériau.

Au fur et à mesure de la progression du foret dans la première plaque, la force exercée par l'utilisateur et lorsque la première plaque est percée, la force se transmet alors sur la deuxième plaque qui subit une force importante qui peut écailler sa surface.

De la même manière, dans le cas du percement d'une seule plaque, il est souhaitable d'éviter que la force soit trop importante lorsque le foret arrive en fin de perçage pour éviter d'arracher la matière.

Il est donc souhaitable de trouver un système d'aide au perçage qui limite la force lorsque la plaque est pratiquement percée Le document US 2 294 303 A divulgue un système d'aide au perçage selon le préambule de la revendication 1.

Un objet de la présente invention est de proposer un système d'aide au perçage qui limite la force exercée par l'utilisateur à la fin du perçage.

A cet effet, est proposé un système d'aide au perçage tel que revendiqué dans la revendication 1 et destiné à être monté sur une perceuse.

Un tel système permet de faire ressentir à l'utilisateur le fait qu'il arrive à la fin du perçage et qu'il doit donc limiter la force qu'il exerce sur la perceuse.

Avantageusement, le coulisseau présente, au niveau de son extrémité distale, une semelle.

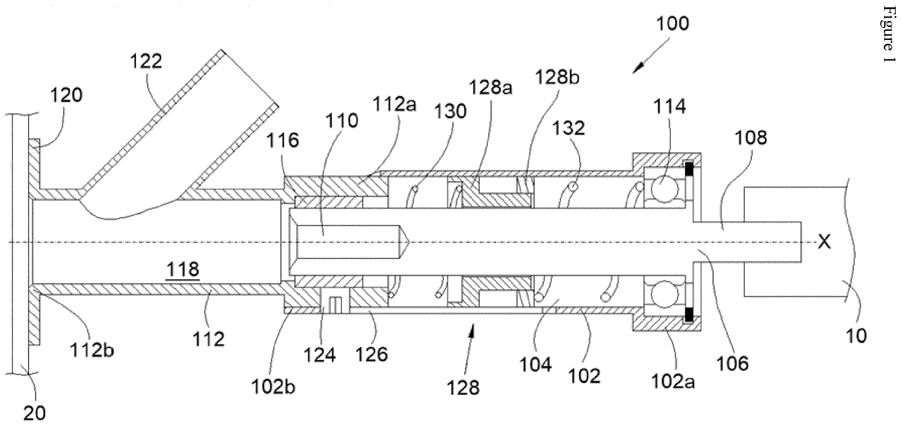

Les caractéristiques de l'invention mentionnées ci-dessus, ainsi que d'autres, apparaîtront plus clairement à la lecture de la description suivante d'un exemple de réalisation, ladite description étant faite en relation avec la figure 1 jointe qui est une vue en coupe par un plan axial d'un système d'aide au perçage selon l'invention.

La figure 1 montre un système d'aide 100 monté sur une perceuse qui est représentée ici par son mandrin 10 qui est mobile en rotation autour d'un axe de rotation X.

Le système d'aide 100 comporte un corps 102 avec un premier logement 104 et un arbre 106.

Le corps 102 présente une extrémité proximale 102a orientée vers la perceuse et une extrémité distale 102b orientée à l'opposé. Le premier logement 104 s'étend entre l'extrémité proximale 102a et l'extrémité distale 102b du corps 102.

L'arbre 106 est monté mobile en rotation autour de l'axe de rotation X à l'intérieur du premier logement 104 et il présente une extrémité proximale 108 qui se fixe au mandrin 10 et une extrémité distale 110 à laquelle se fixe un foret.

Dans le mode de réalisation de l'invention présenté ici, l'extrémité proximale 102a du corps 102 correspond globalement à l'extrémité proximale 108 de l'arbre 106 et l'extrémité distale 102b correspond globalement à l'extrémité distale 110 de l'arbre 106.

Le système d'aide 100 comporte également un coulisseau 112 qui présente une extrémité proximale 112a et une extrémité distale 112b qui vient en appui contre une plaque à percer.

L'extrémité proximale 112a du coulisseau 112 est montée mobile de manière télescopique à l'intérieur du premier logement 104, c'est-à-dire qu'il est mobile en translation parallèlement à l'axe de rotation X à l'intérieur du premier logement 104 au niveau de l'extrémité distale 102b du corps 102. A l'inverse, le corps 102 est mobile en translation par rapport au coulisseau 112.

Le coulisseau 112 présente également un deuxième logement 118 qui prolonge le premier logement 104 et qui s'étend entre l'extrémité proximale 112a et l'extrémité distale 112b du coulisseau 112.

Le foret traverse alors le deuxième logement 118.

Le système d'aide 100 comporte une bague 128 qui est mobile en translation parallèlement à l'axe de rotation X sur l'arbre 106 et à l'intérieur du premier logement 104.

Le système d'aide 100 comporte un premier ressort de compression 130 présentant une première raideur et qui est disposé dans le premier logement 104 et vient en appui, d'une part, contre la bague 128 et, d'autre part, contre l'extrémité proximale 112a du coulisseau 112.

Le système d'aide 100 comporte un deuxième ressort de compression 132 présentant une deuxième raideur supérieure à la première raideur. Selon un mode de réalisation particulier, la première raideur est de l'ordre de 3N/mm et la deuxième raideur est de l'ordre de 5N/mm.

Le deuxième ressort de compression 132 est disposé dans le premier logement 104 et vient en appui, d'une part, contre la bague 128 et, d'autre part, contre l'extrémité proximale 102a du corps 102, ici par l'intermédiaire d'un palier proximal 114.

Le fonctionnement du système d'aide 100 est alors le suivant. L'extrémité distale 112b du coulisseau 112 est appliquée contre une plaque 20 à percer. La perceuse est mise en marche et le mandrin 10 fait tourner l'arbre 106 qui entraîne à son tour le foret. L'utilisateur exerce une force sur la perceuse vers la plaque 20, ce qui entraîne le déplacement du corps 102 vers la plaque 20 et donc l'enfoncement du coulisseau 112 à l'intérieur du premier logement 104 par écrasement du premier ressort 130. Lorsque le premier ressort 130 est entièrement écrasé, la force exercée par l'utilisateur agit alors sur le deuxième ressort 132 qui se comprime à son tour et dont la raideur est plus importante ce qui permet à l'utilisateur de ressentir une variation dans la résistance à l'avancement et ainsi de comprendre que le foret a pratiquement traversé la plaque 20. L'utilisateur peut alors relâcher sa pression sur la perceuse pour éviter de sortir de la plaque 20 avec une trop grande vitesse au risque d'arracher de la matière à la plaque 20 ou d'écailler une autre plaque qui serait derrière la plaque 20.

L'arbre 106 est guidé en rotation par le palier proximal 114, ici un roulement à billes, fixé au corps 102 dans le premier logement 104, et par un palier distal 116, ici un coussinet, fixé au coulisseau 112 dans le deuxième logement 118.

Le palier distal 116 se positionne ici au niveau de l'extrémité distale 110 de l'arbre 106 et de l'extrémité proximale 112a du coulisseau 112. Le palier proximal 114 se positionne ici au niveau de l'extrémité proximale 108 de l'arbre 106 et de l'extrémité proximale 102a du corps 102.

Le palier distal 116 est monté serré dans l'extrémité proximale 112a et maintenu par une vis de serrage 124 qui se visse dans le coulisseau 112 et est en appui contre le palier distal 116. Dans le mode de réalisation de l'invention présenté à la figure 1, le corps 102 présente une fente 126 qui permet le passage de la tête de la vis de serrage 124 lors du déplacement du corps 102 par rapport au coulisseau 112. La vis de serrage 124 sert également de butée au coulisseau 112 pour éviter qu'il soit entraîné en rotation.

La fixation du palier proximal 114 est assurée ici par un épaulement du corps 102 et un circlips.

Dans le mode de réalisation de l'invention présenté à la figure 1, le coulisseau 112 présente, au niveau de son extrémité distale 112b, une semelle 120 qui offre une grande surface d'appui et qui est appliquée contre la plaque à percer.

Dans le mode de réalisation de l'invention présenté à la figure 1, le coulisseau 112 présente un tube d'aspiration 122 qui peut être connecté à un aspirateur afin d'évacuer les déchets générés par le perçage.

Dans le mode de réalisation de l'invention présenté à la figure 1, la bague 128 est réglable en longueur parallèlement à l'axe de rotation X afin d'ajuster le moment où le premier ressort 130 est comprimé en fonction de l'épaisseur de la plaque à percer.

La bague 128 comporte ici deux anneaux 128a-b vissés l'un avec l'autre et la longueur de la bague 128 est ajustée par un vissage plus ou moins important des deux anneaux 128a-b entre eux. L'axe de vissage est l'axe de rotation X.

Il est également possible de remplacer la bague 128 par une bague de longueur différente ou de remplacer les ressorts 130, 132 en fonction des besoins. Ces modifications permettent d'obtenir des courses différentes.

## Revendications

1. Système d'aide au perçage (100) destiné à être monté sur une perceuse et comportant :
- un corps (102) avec un premier logement (104) s'étendant entre une extrémité proximale (102a) et une extrémité distale (102b) du corps (102), où l'extrémité proximale (102a) est destinée à être orientée vers la perceuse,
- un arbre (106) monté mobile en rotation autour d'un axe de rotation (X) à l'intérieur du premier logement (104) et présentant une extrémité proximale (108) destinée à se fixer à un mandrin (10) de la perceuse et une extrémité distale (110) à laquelle se fixe un foret, **caractérisé en ce que** le système d'aide au perçage comporte également:
- un coulisseau (112) qui présente une extrémité proximale (112a) et une extrémité distale (112b) destinée à venir en appui contre une plaque (20) à percer, où l'extrémité proximale (112a) du coulisseau (112) est montée mobile en translation parallèlement à l'axe de rotation (X) à l'intérieur du premier logement (104) au niveau de l'extrémité distale (102b) du corps (102), où le coulisseau (112) présente un deuxième logement (118) qui prolonge le premier logement (104) et qui s'étend entre l'extrémité proximale (112a) et l'extrémité distale (112b) du coulisseau (112),
- une bague (128) mobile en translation parallèlement à l'axe de rotation (X) sur l'arbre (106) et à l'intérieur du premier logement (104),
- un premier ressort de compression (130) présentant une première raideur et disposé dans le premier logement (104) et en appui, d'une part, contre la bague (128) et, d'autre part, contre l'extrémité proximale (112a) du coulisseau (112), et
- un deuxième ressort de compression (132) présentant une deuxième raideur supérieure à la première raideur, disposé dans le premier logement (104) et en appui, d'une part, contre la bague (128) et, d'autre part, contre l'extrémité proximale (102a) du corps (102).

2. Système d'aide au perçage (100) selon la revendication 1, **caractérisé en ce que** le coulisseau (112) présente, au niveau de son extrémité distale (112b), une semelle (120).

3. Système d'aide au perçage (100) selon l'une des revendications 1 ou 2, **caractérisé en ce que** la bague (128) est réglable en longueur parallèlement à l'axe de rotation (X).

4. Système d'aide au perçage (100) selon la revendication 3, **caractérisé en ce que** la bague (128) comporte deux anneaux (128a-b) vissés l'un avec l'autre.

5. Perceuse comportant un mandrin (20) et un système d'aide au perçage (100) selon l'une des revendications précédentes, où l'extrémité proximale (108) de l'arbre (106) est fixée au mandrin (10) et où un foret est fixé à l'extrémité distale (110) de l'arbre (106) et logé dans le deuxième logement (118).

## Patentansprüche

1. Hilfssystem für das Bohren (100), welches dazu bestimmt ist, an einer Bohrmaschine angebracht zu werden, und umfasst:
- einen Körper (102) mit einem ersten Aufnahmeraum (104), der sich zwischen einem proximalen Ende (102a) und einem distalen Ende (102b) des Körpers (102) erstreckt, wobei das proximale Ende (102a) dazu bestimmt ist, zur Bohrmaschine hin ausgerichtet zu werden,
- eine Welle (106), die drehbeweglich um eine Drehachse (X) im Inneren des ersten Aufnahmeraumes (104) angebracht ist und ein proximales Ende (108), das dazu bestimmt ist, an einem Spannfutter (10) der Bohrmaschine befestigt zu werden, und ein distales Ende (10), an welchem ein Bohrer befestigt wird, aufweist,
**dadurch gekennzeichnet, dass** das Hilfssystem für das Bohren außerdem umfasst:
- ein Gleitstück (112), welches ein proximales Ende (112a) und einen distales Ende (112b), das dazu bestimmt ist, an einer zu bohrenden Platte (20) zur Anlage zu kommen, aufweist, wobei das proximale Ende (112a) des Gleitstücks (112) translatorisch beweglich parallel zur Drehachse (X) im Inneren des ersten Aufnahmeraumes (104) am distalen Ende (102b) des Körpers (102) angebracht ist, wobei das Gleitstück (112) einen zweiten Aufnahmeraum (118) aufweist, welcher den ersten Aufnahmeraum (104) verlängert und welcher sich zwischen dem proximalen Ende (112a) und dem distalen Ende (112b) des Gleitstücks (112) erstreckt,
- eine Hülse (128), die translatorisch beweglich parallel zur Drehachse (X) auf der Welle (106) und im Inneren des ersten Aufnahmeraumes (104) ist,
- eine erste Druckfeder (130), die eine erste Steifigkeit aufweist und im ersten Aufnahmeraum (104) angeordnet ist und einerseits an der Hülse (128) und andererseits am proximalen Ende (112a) des Gleitstücks (112) anliegt, und
- eine zweite Druckfeder (132), die eine zweite Steifigkeit aufweist, die größer als die erste Steifigkeit ist, im ersten Aufnahmeraum (104) angeordnet ist und einerseits an der Hülse (128) und andererseits am proximalen Ende (102a) des Körpers (102) anliegt.

2. Hilfssystem für das Bohren (100) nach Anspruch 1, **dadurch gekennzeichnet, dass** das Gleitstück (112) an seinem distalen Ende (112b) eine Sohle (120) aufweist.

3. Hilfssystem für das Bohren (100) nach einem der Ansprüche 1 oder 2, **dadurch gekennzeichnet, dass** die Hülse (128) in der Länge parallel zur Drehachse (X) verstellbar ist.

4. Hilfssystem für das Bohren (100) nach Anspruch 3, **dadurch gekennzeichnet, dass** die Hülse (128) zwei Ringe (128a-b) umfasst, die miteinander verschraubt sind.

5. Bohrmaschine, welche ein Spannfutter (20) und ein Hilfssystem für das Bohren (100) nach einem der vorhergehenden Ansprüche umfasst, wobei das proximale Ende (108) der Welle (106) an dem Spannfutter (10) befestigt ist und wobei ein Bohrer an dem distalen Ende (110) der Welle (106) befestigt ist und in dem zweiten Aufnahmeraum (118) aufgenommen ist.

## Claims

1. Drilling aid system (100) intended to be mounted on a drill and comprising:
- a body (102) having a first recess (104) extending between a proximal end (102a) and a distal end (102b) of the body (102), the proximal end (102a) being intended to be oriented towards the drill,
- a shaft (106) that is mounted so as to be able to rotate about an axis of rotation (X) inside the first recess (104) and having a proximal end (108) that is designed to be secured to a chuck (10) of the drill and a distal end (110) to which a drill bit is secured,
**characterized in that** the drilling aid system also comprises:
- a slide (112) which has a proximal end (112a) and a distal end (112b), the latter being designed to bear against a plate (20) that is to be drilled, the proximal end (112a) of the slide (112) being mounted so as to be able to move in translation parallel to the axis of rotation (X) inside the first recess (104) at the distal end (102b) of the body (102), the slide (112) having a second recess (118) which prolongs the first recess (104) and which extends between the proximal end (112a) and the distal end (112b) of the slide (112),
- a ring (128) that is able to move in translation parallel to the axis of rotation (X) on the shaft (106) and inside the first recess (104),
- a first compression spring (130) that has a first stiffness and is arranged in the first recess (104) and bears against the ring (128) on one hand, and against the proximal end (112a) of the slide (112) on the other hand, and
- a second compression spring (132) that has a second stiffness greater than the first stiffness and is arranged in the first recess (104) and bears against the ring (128) on one hand, and against the proximal end (102a) of the body (102) on the other hand.

2. Drilling aid system (100) according to Claim 1, **characterized in that** the slide (112) has a sole (120) at its distal end (112b).

3. Drilling aid system (100) according to either of Claims 1 and 2, **characterized in that** the ring (128) is adjustable in terms of length parallel to the axis of rotation (X).

4. Drilling aid system (100) according to Claim 3, **characterized in that** the ring (128) comprises two annuli (128a-b) that are screwed together.

5. Drill comprising a chuck (20) and a drilling aid system (100) according to one of the preceding claims, the proximal end (108) of the shaft (106) being secured to the chuck (10), and a drill bit being secured to the distal end (110) of the shaft (106) and accommodated in the second recess (118).
